Europäisches Patentamt

European Patent Office

Office européen des brevets

(19)

(11) Veröffentlichungsnummer : **0 050 837**
**B1**

(12)

# EUROPÄISCHE PATENTSCHRIFT

(45) Veröffentlichungstag der Patentschrift :
19.12.84

(21) Anmeldenummer : **81108684.2**

(22) Anmeldetag : **22.10.81**

(51) Int. Cl.³ : **G 21 C   3/30, G 21 C 15/06**

(54) **Brennelementbündel für einen Kernreaktor.**

(30) Priorität : **29.10.80 SE 8007593**

(43) Veröffentlichungstag der Anmeldung :
**05.05.82 Patentblatt 82/18**

(45) Bekanntmachung des Hinweises auf die Patenterteilung : **19.12.84 Patentblatt 84/51**

(84) Benannte Vertragsstaaten :
**BE CH DE FR GB IT LI NL**

(56) Entgegenhaltungen :
AT-B-   270 010
CH-A-   472 093
DE-A- 1 911 973
DE-A- 2 219 124
DE-B- 1 023 829
DE-B- 1 068 823
DE-B- 1 202 404

(73) Patentinhaber : **AB ASEA-ATOM**
**S-721 83 Västeras (SE)**

(72) Erfinder : **Nylund, Olov, Dipl.-Ing.**
**Ragnaröksgatan 17**
**S-720 17 Västeräs (SE)**
Erfinder : **Schölln, Bertil**
**Bysägsgatan 10**
**S-724 81 Västeräs (SE)**

(74) Vertreter : **Boecker, Joachim, Dr.-Ing.**
**Rathenauplatz 2-8**
**D-6000 Frankfurt a.M. 1 (DE)**

## Beschreibung

Die Erfindung betrifft ein Brennelementbündel für einen Siedewasserkernreaktor gemäß dem Oberbegriff des Anspruches 1.

Ein derartiger Reaktor ist bereits in der älteren EP-A-811016 21.1 beschrieben.

Genauer gesagt betrifft die Erfindung ein Brennelementbündel, das in solcher Weise aufgebaut ist, daß es mit Vorteil in einem Siedewasserreaktor verwendet werden kann, der ursprünglich für Brennelementbündel vorgesehen war, die keinen zentralen Wasserkanal haben. Das Brennelementbündel, auf das sich die Erfindung bezieht, soll in einen solchen Siedewasserreaktor ohne wesentliche Änderungen der übrigen Bauteile des Reaktors einbaubar sein. Ein Problem, auf das man dabei stößt, besteht darin, den erforderlichen « by pass »-Fluß durch den/die zentralen Wasserkanal (kanäle) zu erreichen, wenn die Reaktorleistung durch Reduktion der Drehzahl der Zirkulationspumpen verringert wird. Das Problem kann nicht dadurch gelöst werden, daß man den betreffenden « bypass »-Kanal einfach mit einem größeren hydraulischen Leitvermögen ausführt, da dieser einen Wert haben soll, der eine optimale Wasserverteilung bei voller Reaktorleistung ergibt.

Der Erfindung liegt die Aufgabe zugrunde, ein Brennelementbündel nach dem Oberbegriff des Anspruches 1 zu entwickeln, bei welchem der erforderliche « by-pass »-Fluß auch bei starker Verringerung der Reaktorleistung und des Zirkulationsflusses erreicht wird, ohne daß er deshalb bei voller Leistung zu groß wird.

Zur Lösung dieser Aufgabe wird ein Brennelementbündel nach dem Oberbegriff des Anspruches 1 vorgeschlagen, welches erfindungsgemäß die im kennzeichnenden Teil des Anspruches 1 genannten Merkmale hat.

Vorteilhafte Weiterbildungen der Erfindung sind in den abhängigen Ansprüchen genannt.

Der gesamte einem Brennelementbündel zugeführte Wasserfluß wird am Eingang des Brennelementbündels immer einer Drosselung unterworfen. Gemäß einer bekannten Theorie machen sich die im Zusammenhang mit der Drosselung auftretenden Energieverluste erst in einem geringen Abstand in Strömungsrichtung von der Drosselöffnung bemerkbar, genauer gesagt dort, wo sich der Strömungsquerschnitt wieder vergrößert. Die Erfindung basiert auf der Erkenntnis, daß ein « by-pass »-Fluß durch einen vertikalen Wasserkanal in einem Brennelementbündel bei stark fallendem Zirkulationsfluß relativ wenig reduziert wird, wenn der « By-pass »-Fluß mit Hilfe eines vertikalen Einlaufrohres zugeführt wird, dessen unteres Ende unter dem Niveau liegt, auf dem der gedrosselte Wasserfluß einen größeren Querschnitt mit nur vertikalen Stromlinien angenommen hat.

Anhand der in den Figuren gezeigten Ausführungsbeispiele soll die Erfindung näher erläutert werden. Es zeigen

Figur 1 bis 4 eine erste Ausführungsform eines Brennelementbündels gemäß der Erfindung,

Figur 5 bis 8 eine zweite Ausführungsform eines Brennelementbündels gemäß der Erfindung,

Figur 9 eine dritte Ausführungsform eines Brennelementbündels gemäß der Erfindung in partiellem Axialschnitt,

Figur 10 eine vierte Ausführungsform eines Brennelementbündels gemäß der Erfindung in partiellem Axialschnitt.

Sämtliche Ausführungsformen des Brennelementbündels gemäß der Erfindung werden in einem Reaktorkern auf bekannte Weise angeordnet, und zwar mit vier Brennelementbündeln in jedem Kernmodul, mit Wasserspalten zwischen benachbarten Brennelementbündeln und mit einem im Querschnitt kreuzförmigen Steuerstab in jedem Modul. Außer dem an den Brennstäben entlang fließenden und mit den Brennstäben in Kontakt stehenden Wasserstrom wird der Reaktorkern durchströmt von einem ersten « bypass »-Fluß, der auf die genannten Spalten zwischen den Brennelementbündeln lokalisiert ist, und von einem zweiten « by-pass »-Fluß, der auf die vorgenannten vertikalen Wasserkanäle lokalisiert ist.

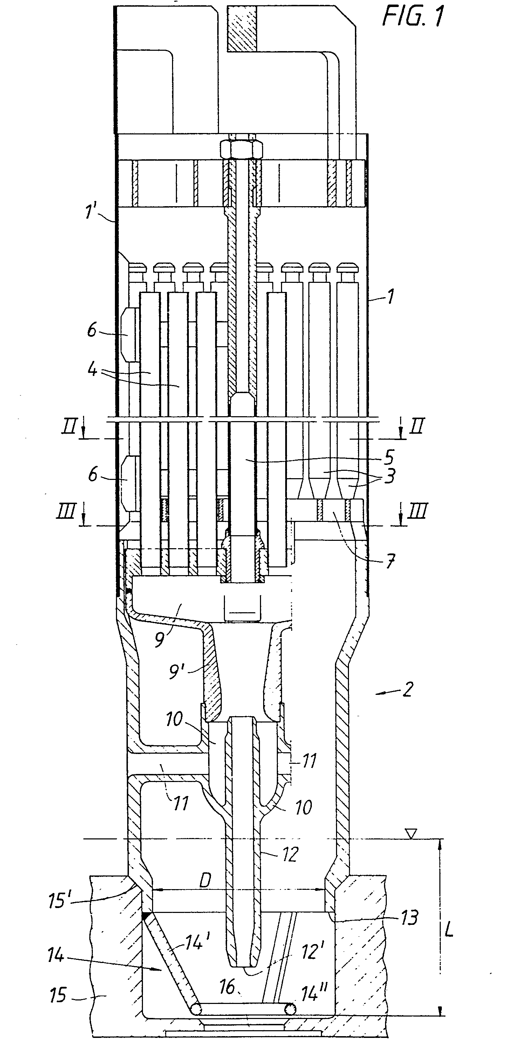

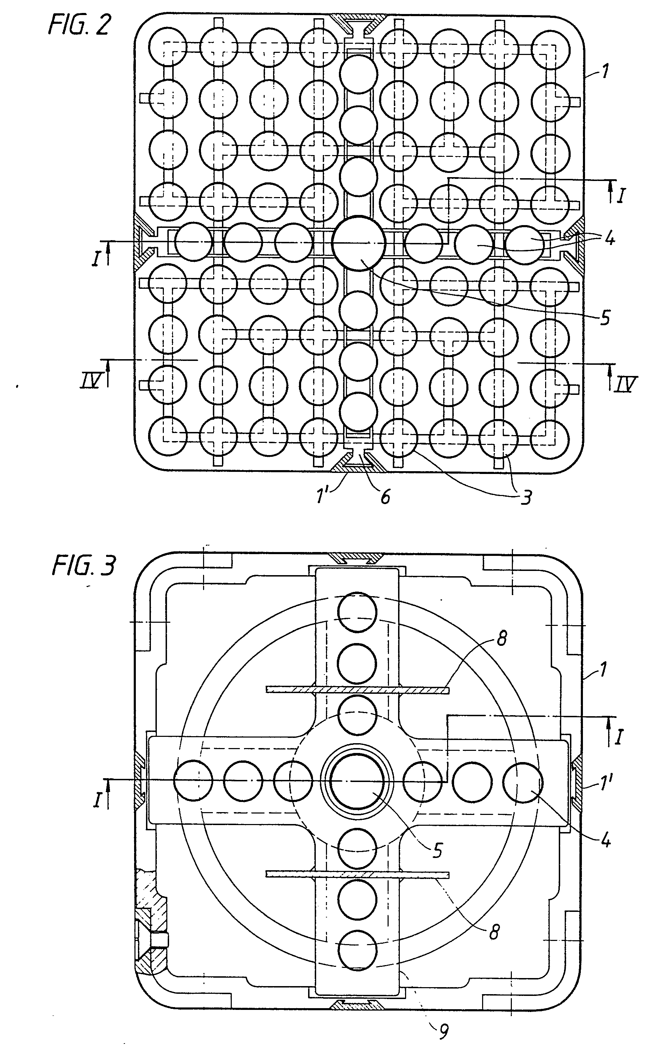

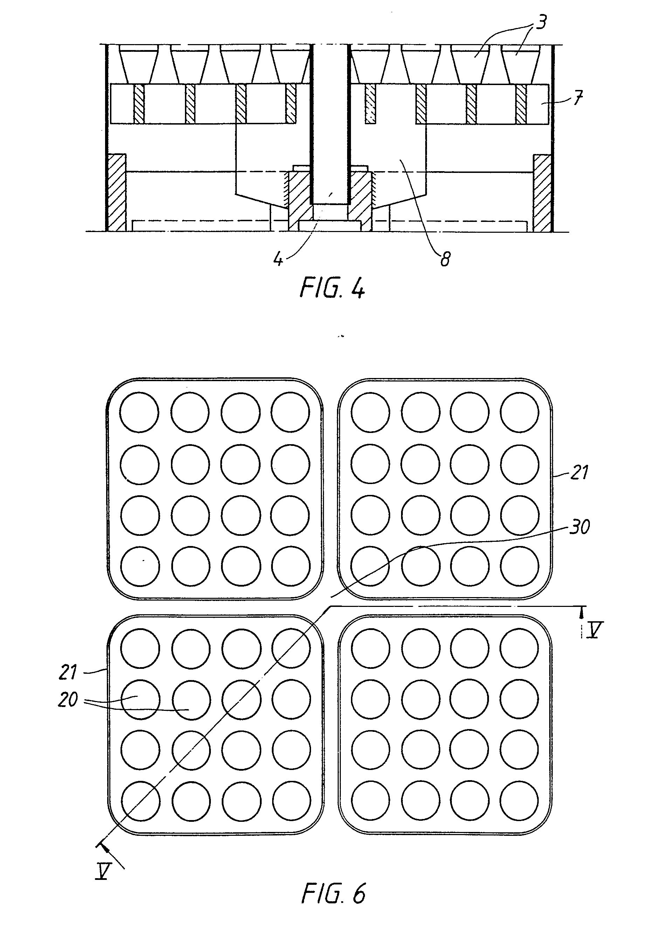

Figur 1 zeigt einen Vertikalschnitt längs der Linie I-I in Figur 2 und 3, während die Figuren 2 und 3 Horizontalschnitte längs der Linien II-II und III-III in Figur 1 zeigen. Figur 4 zeigt einen partiellen Vertikalschnitt längs der Linie IV-IV in Figur 2.

In den Figuren 1 bis 4 bezeichnet 1 einen Brennstoffkanal, der an einer Übergangshülse 2 befestigt ist. Der Brennstoffkanal 1, der aus vier untereinander gleichen Blechelementen zusammengesetzt ist, die durch vier vertikale Leisten 1' miteinander verbunden sind, umschließt vierundsechzig Brennstäbe 3 sowie zwölf kleinere Wasserrohre 4 und ein größeres, zentrales Wasserrohr 5, von denen jedes einen Wasserfluß führt, der in Längsrichtung der vertikalen Brennstäbe strömt, der jedoch gegenüber diesen abgegrenzt ist. Die Wasserrohre sind mittels mehrerer länglicher Verbindungsorgane 6, die mit ihren Enden an den Leisten 1' befestigt sind, mechanisch miteinander verbunden. Die Brennstäbe 3 ruhen mit ihren unteren Enden auf einem unteren Gitter 7, das auf zwei vertikalen Tragplatten 8 ruht, welche an einem hohlen, kreuzförmigen Wasserverteilungsorgan 9 festgeschweißt sind, das Anschlußöffnungen für die Wasserrohre 4 und 5 hat. Die Anschlußöffnungen haben ringförmige Tragflächen, an denen die Wasserrohre 4 und 5 mit ihren unteren Endflächen ruhen. Das Wasserverteilungsorgan 9 hat einen nach unten gerichteten, innenseitig konischen Einlaufstutzen 9', der von einem becherförmigen Körper 10 getragen wird, der mit der Übergangshülse 2 durch vier radial verlaufende Einsaugrohre 11 fest verbunden ist, über welche der Innenraum des Körpers 10 mit dem radial außerhalb des Übergangsstücks 2 liegenden Raum verbunden ist. Durch den becherförmigen Körper 10 verläuft ein Einlaufrohr 12 für Wasser für die Wasserrohre 4 und 5. Das Einlaufrohr 12, das am Boden des Körpers 10 befestigt und druckdicht durch diesen hindurchgeführt ist, reicht mit seiner Einlauföffnung bis unterhalb einer im wesentlichen ringförmigen Endfläche 13 des hülsenförmigen Übergangsstückes 2. Ein Steuerorgan 14, das aus einem Ring 14″ und mehreren hieran befestigten Stäben 14′ besteht, ist unterhalb der Übergangshülse 2 angeordnet, wobei die oberen Enden der Stäbe an einer nach unten gerichteten, ringförmigen Endfläche 13 der Übergangshülse 2 festgeschweißt sind. Das gezeigte Brennelementbündel wird zusammen mit drei gleichen Brennelementbündeln von einer gemeinsamen, für vier Brennelementbündel vorgesehenen Tragplatte 15 getragen, die mit einer konischen Tragfläche 15′ und einer kreisförmigen Drosselöffnung 16 für jedes Brennelementbündel versehen ist. In Übereinstimmung mit bekannten Ausführungen wird das Brennelementbündel mit seinem niedrigsten Punkt in einem vertikalen Abstand von höchstens 20 mm, vorzugsweise weniger als 10 mm von der Drosselöffnung 16 angeordnet.

Der Stutzen 9′, der Körper 10, die radialen Rohre 11 und das Einlaufrohr 12 bilden zusammen eine Wasserstrahlpumpe, wobei der dem Wasserverteilungsorgan 9 zugeführte Fluß die Summe der durch die Rohre 11 und der durch das Einlaufrohr 12 strömenden Flüsse ist. Bei der gezeigten Ausführungsform läßt man es zu, daß ein wesentlicher Teil, mindestens 1/4, des durch die Wasserrohre 4 und 5 strömenden Wassers über die Einsaugrohre 11 zugeführt wird.

Es ist wichtig, daß der durch die Wasserrohre 4 und 5 strömende Fluß nicht nur bei voller Reaktorleistung groß genug ist, sondern daß er auch mit dem Zirkulationskühlfluß auf solche Weise variiert, daß er bei reduziertem Zirkulationskühlfluß und reduzierter Reaktorleistung, beispielsweise bei 35 % des vollen Zirkulationskühlflusses, groß genug ist, d. h. so groß ist, daß in den Wasserrohren 4 und 5 kein oder nur ein unbedeutendes Sieden stattfindet. Berechnungen haben ergeben, daß der durch die Wasserrohre 4 und 5 strömende Fluß bei abnehmender Pumpendrehzahl relativ wenig sinkt und sich bei heruntergeregeltem Reaktor auf dem erforderlichen Wert hält, wenn das Einlaufrohr 12 auf solche Weise ausgebildet und angeordnet ist, daß die Einlauföffnung 12′ im Verhältnis zur Drosselöffnung 16 tief genug liegt, oder mit anderen Worten, daß sie im Verhältnis zu dem niedrigsten Punkt des Brennelementbündels tief genug liegt. Der Innendurchmesser der Endfläche 13 ist mit D bezeichnet. Das Einlaufrohr 12 ist mit seiner Einlauföffnung 12′ unterhalb einer Horizontalebene angeordnet, deren Höhe L über dem niedrigsten Punkt des Brennelementbündels gleich dem Wert D ist. Vorzugsweise liegt die Einlauföffnung 12′ auch unterhalb einer Horizontalebene, deren Höhe über dem niedrigen Punkt des Brennelementbündels gleich dem Wert 0,6 D ist. Die Höhe der genannten Horizontalebene in Bezug auf den niedrigsten Punkt des Brennelementbündels kann auch negativ sein.

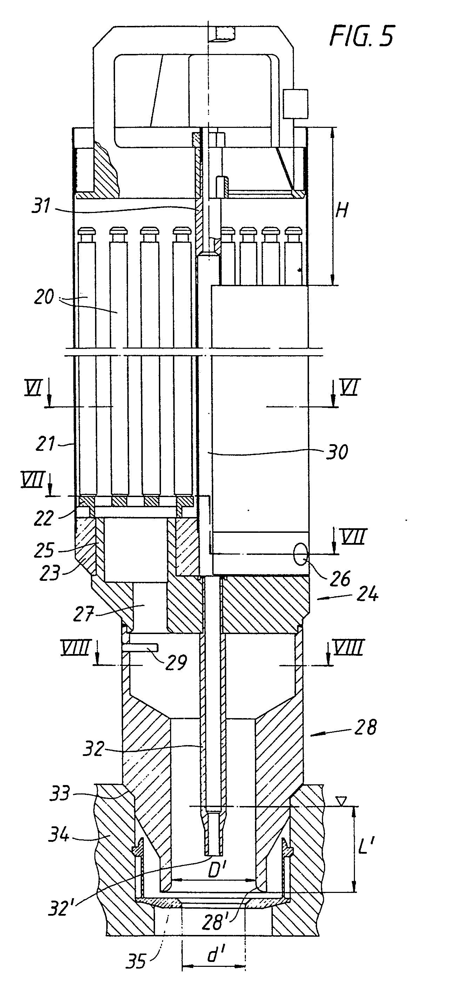

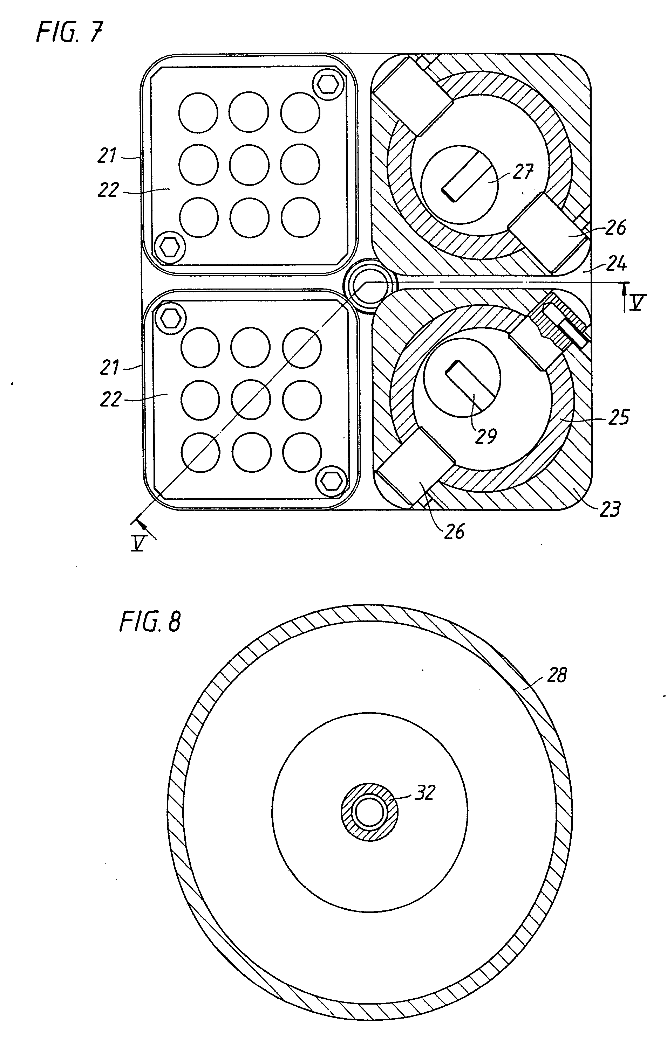

Das in den Figuren 5 bis 8 gezeigte Brennelementbündel ist in Figur 5 im Vertikalschnitt längs der Linie V-V in Figur 6 und 7 gezeigt, während die Figuren 6, 7, 8 Querschnitte längs der Linien VI-VI, VII-VII und VIII-VIII in Figur 5 zeigen. Das Brennelementbündel enthält vierundsechzig Brennstäbe 20, die auf vier gleiche Teilbündel verteilt sind. Jedes Teilbündel ist in einem im wesentlichen quadratischen Brennstoffkanal 21 angeordnet und mit einer unteren Gitterplatte versehen. Jeder Brennstoffkanal 21 enthält mehrere in den Figuren nicht dargestellte Abstandshalter sowie eine untere Gitterplatte 22, welche die Brennstäbe des Teilbündels trägt. Die unteren Gitterplatten 22 ruhen jeweils auf einem an dem zugeordneten Brennstoffkanal 21 festgeschweißten Grundrahmen 23, der eine kreiszylindrische innere Fläche hat. Die vier Grundrahmen 23 werden von einem Verteilerblock 24 getragen, der mit vier hohlzylindrischen Ablaufstutzen 25 versehen ist. Jeder der vier Grundrahmen 23 umschließt ohne nennenswertes Spiel einen Ablaufstutzen 25 und ist durch radial gerichtete Zapfen 26 an dem Ablaufstutzen 25 befestigt. Die Ablaufstutzen 25 sind über je einen Drosselkanal 27 mit einem am Verteilungsblock 24 festgeschweißten Übergangsstück 28 hydraulisch verbunden. Vier Sperrstäbe 29 sind im Übergangsstück unterhalb ihres jeweiligen Drosselkanals 27 befestigt, um eine Blockierung eines Drosselkanals durch irgendeinen losgerissenen und vom Kühlwasser mitgeführten Gegenstand zu verhindern.

Äußere Wandflächen der Brennstoffkanäle 21 begrenzen einen vertikalen Wasserkanal 30 mit kreuzförmigen Querschnitt, wobei jeder Kanalarm in größerem oder kleinerem Maße in radialer Richtung offen ist. Die vier je ein Teilbündel umschließenden Brennstoffkanäle 21 sind an ihren oberen Enden oberhalb der aktiven Strecke mit einem oberen Brennstoffkanalabschnitt verbunden, der eine vertikale Länge H hat und sämtliche Brennstäbe des Brennelementbündels umschließt. Ein oberer Abschnitt jedes Brennstoffkanals 21 ist mechanisch mit einem zentralen oberen Rohr 31 verbunden.

Der vertikale Kanal 30 ist an seinem unteren Ende hydraulisch mit einem Einlaufrohr 32 verbunden, das mit seinem oberen Ende durch den Verteilerblock 24 geführt wird. Das Übergangsstück 28 hat eine konische Lagerfläche 33, die an einer entsprechenden Fläche einer in einer Tragplatte 34 angebrachten Durchflußöffnung anliegt. Die Durchflußöffnung ist mit einer Drosselscheibe 35 versehen, die eine kreisförmige Drosselöffnung hat, deren Durchmesser d′ ist. Das Übergangsstück 28 hat ganz unten eine kreisringförmige Endfläche 28′. Der Durchmesser an der Innenkante der Endfläche 28′ ist mit D′ bezeichnet.

Die Einlauföffnung 32′ des Einlaufrohres 32 liegt unterhalb eines Niveaus, dessen Höhe über der Außenkante der ringförmigen Endfläche 28' mit L' bezeichnet ist, wobei die Höhe L' gleich D' ist. Vorzugsweise liegt die Einlauföffnung 32' unterhalb einer Horizontalebene, wo die entsprechende Niveauhöhe gleich 0,6 D' ist, z. B. unter der Drosselscheibe 35.

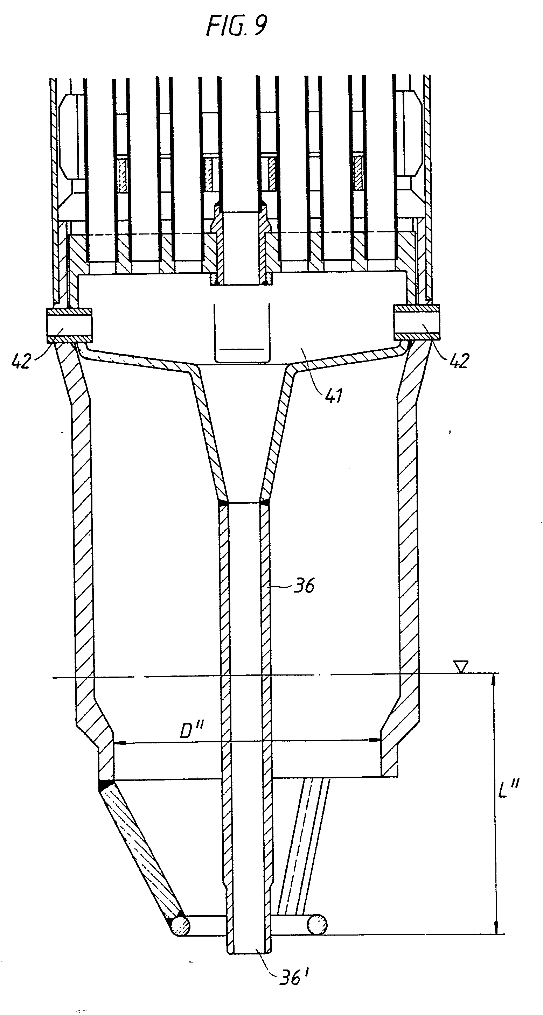

Die in Figur 9 gezeigte Ausführungsform unterscheidet sich von der nach den Figuren 1 bis 4 dadurch, daß die Ejektorpumpenvorrichtung fehlt und daß stattdessen ein Einlaufrohr 36 vorhanden ist, das mechanisch und hydraulisch mit einem kreuzförmigen Wasserverteilungsorgan 41 ähnlicher Konstruktion wie das in Figur 1 gezeigte Organ 9 verbunden ist. Der über dem Organ 41 liegende Teil des Brennelementbündels stimmt genau mit dem entsprechenden Teil der Ausführungsform nach Figur 1 bis 4 überein. Der vom Organ 41 umschlossene Hohlraum ist durch mindestens ein radiales Rohr 42 mit dem außerhalb des Brennelementbündels liegenden Raum hydraulisch verbunden. Die Einlauföffnung 36' des Einlaufrohres 36 liegt bedeutend niedriger als die in Figur 1 gezeigte Öffnung 12'. Die gewünschte Wirkung könnte man jedoch in ungefähr dem gleichen Maße mit einem anderen Niveau für die Einlauföffnung 36' erzielen, z. B. in derselben relativen Höhe wie die Öffnung 12' in Figur 1. Die Einlauföffnung des Einlaufrohres muß jedoch unter allen Umständen niedriger als ein Niveau liegen, das um das Maß L" über dem niedrigsten Punkt des Brennelementbündels liegt und im übrigen gleich dem Durchmesser D" ist.

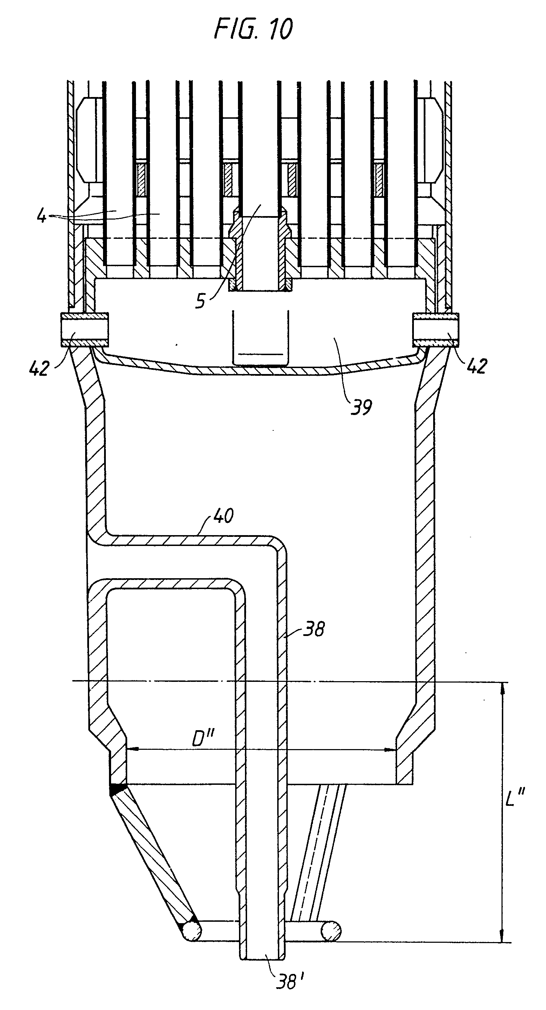

Das in Figur 10 gezeigte Brennelementbündel unterscheidet sich von dem gemäß Figur 9 nur hinsichtlich des Wasserverteilungsorganes 39 und des Einlaufrohres 38. Das Organ 39 hat keinen nach unten gerichteten Einlaufstutzen, und das Einlaufrohr 38 ist an seinem oberen Ende nur mit dem radial außerhalb der Übergangshülse befindlichen Raum durch mindestens einen horizontalen Rohrabschnitt 40 verbunden. Die durch die Einlauföffnung 38' des Einlaufrohres strömende Wassermenge wird den vertikalen Wasserrohren 4 und 5 des Brennelementbündels indirekt über die Spalten zwischen den Brennelementbündeln zugeführt, von welchen Spalten diese Wassermenge durch die radialen Rohre 42 in das Wasserverteilungsorgan 39 hineinströmt.

Bei den in den Figuren 9 und 10 gezeigten Brennelementbündeln geht man davon aus, daß ein schwaches Sieden in den Wasserrohren 4 und 5 akzeptiert werden kann und daß dieses Sieden eine Selbstzirkulation bewirkt, so daß Wasser durch die radialen Rohre 42 nach innen gesaugt wird.

## Ansprüche

1. Brennelementbündel für einen Siedewasserkernreaktor mit einer unteren Gitteranordnung (7 ; 22) und mehreren von dieser getragenen Brennstäben (3 ; 20), mit mindestens einem Brennstoffkanal (1 ; 21), der eine zugeordnete Gruppe von Brennstäben umgibt, mit einer Übergangshülse (2 ; 28), die eine Einlauföffnung für Reaktorkühlmittel und eine kreisförmige, nach unten gerichtete, im wesentlichen ringförmige Endfläche (13 ; 28') hat, und mit mindestens einem vertikalen Wasserkanal (4, 5 ; 30) für einen in Richtung der Brennstäbe (3 ; 20) verlaufenden, jedoch von diesem abgegrenzten Wasserfluß, bei welchem Brennelementbündel ein Einlaufrohr (12 ; 32 ; 36 ; 38) mit nach unten gerichteter Einlauföffnung in der Übergangshülse für die Zufuhr von Wasser zu dem/den Wasserkanal/Wasserkanälen (4, 5 ; 30) angeordnet ist, wobei die Einlauföffnung (12' ; 32' ; 36' ; 38') unterhalb einer Horizontalebene liegt, deren Abstand von dem niedrigsten Punkt des Brennelementbündels gleich dem kleinsten Durchmesser (D ; D') der ringförmigen Endfläche (13 ; 28') ist.

2. Brennelementbündel nach Anspruch 1, wobei das genannte Einlaufrohr (12) ein nach oben gerichtetes, zu einer Ejektorpumpe gehörendes Ejektorrohr ist, wobei die Ejektorpumpe außerdem ein vertikales Ablaufrohr (9') und mindestens ein Einsaugrohr (11) enthält, wobei das Ablaufrohr (9') hydraulisch mit dem vertikalen Wasserkanal (4, 5) verbunden ist und wobei das/die genannte(n) Einsaugrohr(e) in die radial äußere Seitenwand der Übergangshülse (2) mündet/münden.

3. Brennelementbündel nach Anspruch 1, wobei das Einlaufrohr (32) mit seinem oberen Ende in den vertikalen Wasserkanal (30) mündet.

4. Brennelementbündel nach Anspruch 3, wobei das Einlaufrohr (36) innerhalb der Übergangshülse (2) mit mindestens einer in die äußere Seitenwand des Brennelementbündels mündenden Abzweigverbindung (42) in Verbindung steht.

5. Brennelementbündel nach Anspruch 4, wobei das Brennelementbündel mehrere Wasserkanäle in Form mehrerer vertikaler Wasserrohre (4, 5) enthält, die in zwei Reihen nebeneinander angeordnet sind, die sich an der vertikalen Mittellinie des Brennelementbündels kreuzen, wobei die unteren Enden der Wasserrohre (4, 5) von einem von der genannten Übergangshülse getragenen kreuzförmigen hohlen Körper (41) getragen werden und in diesen münden, wobei der hohle Körper (41) eine zentrale Einlauföffnung hat, die derart angeordnet ist, daß sie einen nach oben gerichteten, von dem Einlaufrohr (36) kommenden Wasserfluß aufzunehmen vermag, und wobei die genannte(n) Abzweigverbindung(en) (42) von dem kreuzförmigen hohlen Körper (41) ausgeht/ausgehen.

6. Brennelementbündel nach Anspruch 1, wobei der vertikale Wasserkanal (4, 5) mit seinem unteren Ende in hydraulischer Verbindung mit mindestens einem radial verlaufenden an der äußeren Seitenwand des Brennelementbündels mündenden Rohr (42) steht und wobei das Einlaufrohr (38) das das Einlaufrohr durchströmende Wasser auf einem Niveau durch die Wand der Übergangshülse leitet, das niedriger liegt als die Mündungsöffnung des mit dem unteren Ende des Wasserkanals verbundenen Rohres (42).

## Claims

1. Fuel assembly for a boiling water nuclear reactor with a lower lattice device (7 ; 27) and a plurality of fuel rods (3 ; 20) supported by said lattice device, with at least one fuel channel (1 ; 21) surrounding a corresponding group of fuel rods, with a transition sleeve (2 ; 28) having an inlet opening for reactor coolant and a circular downwardly-facing substantually annular end surface (13 ; 28'), and with at least one vertical water channel (4, 5 ; 30) for a water flow running along the fuel rods (3 ; 20), but being separated therefrom, characterized in that an inlet tube (12 ; 32 ; 36 ; 38) with a downwardly-facing inlet opening is arranged in the transition sleeve for supplying water to the water channel/channels (4, 5 ; 30), whereby the inlet opening (12' ; 32' ; 36' ; 38') is located below a horizontal plane, the distance of which from the lowermost point of the fuel assembly being equal to the smallest diameter (D ; D') of the annular end surface (13 ; 28').

2. Fuel assembly according to claim 1, whereby said inlet tube (12) is an upwardly-directed ejector tube that forms part of an ejector pump, whereby the ejector pump comprises, in addition, a vertical outlet tube (9') and at least one suction tube (11), whereby the outlet tube (9') is hydraulically connected to the vertical water channel (4, 5) and whereby said suction tube(s) opens/open out through the radially outer side wall of the transition sleeve (2).

3. Fuel assembly according to claim 1, whereby the inlet tube (32) opens with its upper end into the vertical water channel (30).

4. Fuel assembly according to claim 3, whereby the inlet tube (36) communicates inside the transition sleeve (2) with at least one branche connection (42), which opens out through the outer side wall of the fuel assembly.

5. Fuel assembly according to claim 4, whereby the fuel assembly comprises a plurality of water channels in the form of a plurality of vertical water tubes (4, 5) arranged side by side in two rows, which intersect each other in the vertical center line of the fuel assembly, whereby the lower ends of the water tubes (4, 5) are supported by and open into a cruciform hollow body (41) supported by said transition sleeve, whereby the hollow body (41) is provided with a central inlet opening, which is arranged to receive an upwardly directed water flow supplied from said inlet tube (36), and whereby said branche connection(s) (42) branche/branches out from said cruciform hollow body (41).

6. Fuel assembly according to claim 1, whereby said vertical water channel (4, 5) at its lower end communicates hydraulically with at least one radially running tube (42) opening out through the side wall of the fuel assembly, and whereby the inlet tube (38) is arranged to conduct the water flow passing through this inlet tube through the wall of the transition sleeve at a level, which is lower than the outlet opening of said tube (42) connected to the lower end of the water channel.

## Revendications

1. Grappe de crayons combustibles pour un réacteur à eau bouillante, avec un agencement inférieur en forme de grille (7 ; 22) et plusieurs crayons combustibles (3 ; 20) portés par ce dernier, avec au moins un canal de combustible (1 ; 21) qui entoure un groupe associé de crayons combustibles, avec une douille de transition (2 ; 28) possédant un orifice d'entrée pour un réfrigérant pour le réacteur ainsi qu'une surface d'extrémité (13 ; 28') de forme circulaire, dirigée vers le bas et sensiblement de forme annulaire, et avec au moins un canal à eau (4, 5 ; 30) pour un courant d'eau passant en direction des crayons combustibles (3 ; 20) mais délimité par rapport à ce dernier, grappe d'éléments combustibles dans laquelle un tuyau d'admission (12 ; 32 ; 36 ; 38) à orifice d'admission dirigé vers le bas, est disposé dans la douille de transition pour l'admission d'eau au canal ou aux canaux à eau (4, 5 ; 30), l'orifice d'admission (12' ; 32' ; 36' ; 38') étant situé en-dessous d'un plan horizontal dont la distance au point le plus bas de la grappe de crayons combustibles est égale au plus petit diamètre (D ; D') de la surface d'extrémité (13 ; 28') de forme annulaire.

2. Grappe de crayons combustibles selon la revendication 1, dans laquelle ledit tuyau d'admission (12) est constitué par un tube éjecteur dirigé vers le haut et appartenant à une pompe à éjecteur, cette dernière comportant, en outre, un tuyau d'écoulement vertical (9') et au moins un tuyau d'aspiration (11), alors que le tuyau d'écoulement (9') est relié au canal à eau vertical (4, 5) et que ledit ou lesdits tuyaux d'aspiration débouche ou débouchent dans la paroi radialement extérieure de la douille de transition (2).

3. Grappe de crayons combustibles selon la revendication 1, dans laquelle le tuyau d'admission (32) débouche par son extrémité supérieure dans le canal à eau vertical (30).

4. Grappe de crayons combustibles selon la revendication 3, dans laquelle le tuyau d'admission (36) est, à l'intérieur de la douille de transition (2), en liaison avec au moins une liaison de dérivation (42) qui débouche dans la paroi extérieure de la grappe de crayons combustibles.

5. Grappe de crayons combustibles selon la revendication 4, dans laquelle celle-ci comporte plusieurs canaux à eau se présentant sous la forme de plusieurs tuyaux à eau verticaux (4, 5) qui sont disposés côte à côte suivant deux rangées qui se croisent au niveau de la ligne médiane verticale de la grappe de crayons, alors que les extrémités inférieures des tuyaux à eau (4, 5) sont portées par un corps creux cruciforme (41) supporté par ladite douille de transition, que ledit corps creux (41) possède un orifice d'admission central disposé de telle manière qu'il est capable de recevoir un courant d'eau dirigé vers le haut et provenant du tuyau d'admission, et que la ou lesdites liaisons de dérivation (42) est ou sont issues du corps creux cruciforme (41).

6. Grappe de crayons combustibles selon la revendication 1, dans laquelle le canal à eau vertical (4, 5) est, par son extrémité inférieure, en liaison hydraulique avec au moins un tuyau (42) s'étendant radialement et débouchant à la paroi latérale extérieure d'une grappe de crayons, alors que le tuyau d'admission (38) guide l'eau qui le traverse à un niveau à travers la paroi de la douille de transition qui est plus bas que l'embouchure du tuyau (42) qui est relié à l'extrémité inférieure du canal à eau.

0 050 837

FIG. 1

0 050 837

FIG. 2

FIG. 3

FIG. 4

FIG. 6

FIG. 5

## FIG. 7

## FIG. 8

## FIG. 9

## FIG. 10